(19) Europäisches Patentamt
European Patent Office
Office européen des brevets

(11) **EP 4 229 131 B1**

(12) **EUROPEAN PATENT SPECIFICATION**

(45) Date of publication and mention of the grant of the patent:
**28.08.2024 Bulletin 2024/35**

(21) Application number: **21786959.3**

(22) Date of filing: **06.10.2021**

(51) International Patent Classification (IPC):
***C08L 23/14*** *(2006.01)* ***C08F 210/06*** *(2006.01)*
***C08F 2/00*** *(2006.01)* ***C08L 23/12*** *(2006.01)*

(52) Cooperative Patent Classification (CPC):
(C-Sets available)
**C08L 23/142; C08L 23/12;** C08F 110/06;
C08F 210/06; C08F 210/16; C08L 2205/025;
C08L 2205/03; C08L 2308/00; C08L 2314/02

(Cont.)

(86) International application number:
**PCT/EP2021/077492**

(87) International publication number:
**WO 2022/084033 (28.04.2022 Gazette 2022/17)**

(54) **POLYPROPYLENE COMPOSITION**
POLYPROPYLENZUSAMMENSETZUNG
COMPOSITION DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2020 EP 20202638**

(43) Date of publication of application:
**23.08.2023 Bulletin 2023/34**

(73) Proprietor: **Basell Poliolefine Italia S.r.l.**
**20121 Milano (IT)**

(72) Inventors:
- **CIACCIA, Eleonora**
  **44122 Ferrara (IT)**
- **CIARAFONI, Marco**
  **44122 Ferrara (IT)**
- **CATHELIN, Caroline**
  **44122 Ferrara (IT)**
- **DE CAPUA, Alberta**
  **44122 Ferrara (IT)**
- **PRINI, Giansiro**
  **44122 Ferrara (IT)**
- **PO, Daniele**
  **44122 Ferrara (IT)**
- **CAPUTO, Tiziana**
  **44122 Ferrara (IT)**
- **PANTALEONI, Roberto**
  **44122 Ferrara (IT)**
- **DI CAPUA, Alessia**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 3 260 489**
**WO-A1-2010/146074**
**WO-A1-2011/036014**
**WO-A1-2017/013096**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C08F 110/06, C08F 4/651;**
**C08F 110/06, C08F 4/6543;**
**C08F 210/06, C08F 2/001;**
**C08F 210/06, C08F 4/651;**
**C08F 210/06, C08F 4/6543;**
**C08F 210/16, C08F 4/651;**
**C08F 210/16, C08F 4/6543;**
**C08L 23/12, C08L 23/08;**
C08F 110/06, C08F 2500/12, C08F 2500/34, C08F 2500/35;
C08F 210/06, C08F 210/02, C08F 2500/12, C08F 2500/27, C08F 2500/34, C08F 2500/35, C08F 2500/39;
C08F 210/16, C08F 210/06, C08F 2500/12, C08F 2500/27, C08F 2500/34, C08F 2500/35, C08F 2500/39

## Description

FIELD OF THE INVENTION

The present disclosure relates to polypropylene composition having high modulus, low haze and high melting point, the composition is fit for producing injection moulding articles requiring high transparency and high modulus.

BACKGROUND OF THE INVENTION

As is known, the isotactic polypropylene is endowed with an exceptional combination of excellent properties which render it suitable for a very great number of uses. In order to improve said properties into the propylene stereoregular homopolymerization process have been introduced one or more copolymerization steps or one or more monomer have been introduced.

EP 603 723 relates to a polypropylene compositions comprising:

A) from 70 to 98 parts by weight of a crystalline propylene homopolymer, or a crystalline random copolymer of propylene with ethylene and/or $C_4$-$C_{10}$ alpha-olefins, containing from 0.5 to 10% by weight of ethylene and/or alpha-olefins (Fraction A); and

B) from 2 to 30 parts by weight of elastomeric copolymer of ethylene with one or more $C_4$-$C_{10}$ alpha olefins, containing from 60 to 85% by weight of ethylene, and partially soluble in xylene at 25°C

(Fraction B);

wherein said composition has an intrinsic viscosity value in tetrahydronaphthalene at 135° C of the fraction soluble in xylene at 25° C ranging from 0.8 to 1.1 dl/g.

A propylene composition comprising (percent by weight): A) 60%-95%, of a crystalline propylene copolymer containing

from 2.0% to 10.0 % of ethylene derived units having a melting point ranging from 148°C to 160°C; wherein the melting temperature Tm is measured by DSC on the as-reactor polymer; B) 40%-5%, of a copolymer of ethylene containing from 70% to 85%, of ethylene derived units intrinsic viscosity ranging from 0.8 to 3 dl/g. However, for certain applications, such as polymer foams, products having different flowability in combination with high melt strength are particularly desirable. It is known in the art to produce said polymers by melt blending propylene polymer fractions having different molecular weight or to produce reactor-blends of said fractions in multi-step polymerization.

These documents are focused on component A) being a random propylene ethylene copolymer.

The applicant found that modulus of this kind of composition can be improved maintaining a good haze.

SUMMARY OF THE INVENTION

The present disclosure provides a polypropylene composition comprising:

A) from 76 wt% to 95 wt% of a propylene homopolymer having:

- fraction soluble in xylene at 25°C comprised between 2.0 wt% and 4.5 wt%;
- melt flow rate (MFR L according to ISO 1133, condition L, i.e. 230°C and 2.16 kg load) ranging from 60.0 to 110.0 g/10 min;

B) from 5 wt% to 24 wt%, of a copolymer of propylene and ethylene containing from 75 wt% to 90.0 wt%, of ethylene derived units;

wherein in the polypropylene composition:

- the xylene soluble fraction at 25°C ranges from 6.8 wt% to 15.0 wt%;
- the intrinsic viscosity of the fraction soluble in xylene at 25°C ranges from 0.5 dl/g to 1.5 dl/g;
- the content of ethylene derived units in the fraction soluble in xylene at 25°C is lower than the content of ethylene derived units of component B) and ranges from 51.0 wt% to 74.0 wt%, and
- the polypropylene composition has at least two melting points, the higher ranging from 156.0 °C to 166.0 °C and the lower ranging from 90.0 °C to 125.0°C;
- melt flow rate (MFR L according to ISO 1133, condition L, i.e. 230°C and 2.16 kg load) ranging from 45.0 to 110.0 g/10 min

the sum of the amounts of component A) and B) being 100 wt%.

DETAILED DESCRIPTION OF THE INVENTION

The present disclosure provides a polypropylene composition comprising:

A) from 76 wt% to 95 wt%; preferably from 79 wt% to 91 wt%; more preferably from 82 wt% to 88 wt% of a propylene homopolymer having:

- fraction soluble in xylene at 25°C comprised between 2.0 wt% and 4.5 wt%; preferably from 2.5 wt% to 3.8 wt%; more preferably from 3.0 wt% to 3.6 wt%
- melt flow rate (MFR L according to ISO 1133, condition L, i.e. 230°C and 2.16 kg load) ranging from 60.0 to 110.0 g/10 min; preferably from 71 g/10 min to 99 g/10 min; more preferably from 75 g/10 min to 89 g/10 min;

B) from 5 wt% to 24 wt%, preferably from 9 wt% to 21 wt%; more preferably from 12 wt% to 18 wt% of a copolymer of propylene and ethylene containing from 75.0 wt% to 90.0 wt%, preferably from 77.0 wt% to 88.0 wt%; more preferably from 79.0 wt% to 86.0 wt% of ethylene derived units;

wherein in the polypropylene composition:

- the xylene soluble fraction at 25°C ranges from 6.8 wt% to 15.0 wt%; preferably from 7.0 wt% to 13.0 wt%; more preferably from 7.5 wt% to 11.0 wt%;
- the intrinsic viscosity of the fraction soluble in xylene at 25°C ranges from 0.5 dl/g to 1.5 dl/g; preferably from 0.7 dl/g to 1.3 dl/g; more preferably from 0.8 dl/g to 1.2 dl/g;
- the content of ethylene derived units in the fraction soluble in xylene at 25°C is lower than the content of ethylene derived units of component B) and ranges from 51.0 wt% to 74.0 wt%, preferably from 55.0 wt% to 71 wt%; more preferably from 58.0 wt% to 67.0 wt% and
- the polypropylene composition has at least two melting points, the higher ranging from 156.0 °C to 166.0 °C; preferably ranging from 158.0°C to 165.0°C; more preferably ranging from 159.0 °C to 165°C and the lower ranging from 90.0 °C to 125.0°C, preferably from 100.0°C to 120.0 °C; more preferably from 104.0°C and 117.0°C;
- melt flow rate (MFR L according to ISO 1133, condition L, i.e. 230°C and 2.16 kg load) ranging from 45.0 to 110.0 g/10 min; preferably from 50 g/10 min to 90 g/10 min; more preferably from 58 g/10 min to 85 g/10 min.

the sum of the amounts of component A) and B) being 100 wt%.

For the purpose of the present disclosure the term copolymer has to be intended as a polymer containing only two kind if monomers such as propylene and ethylene.

The composition of the present disclosure is endowed with high modulus and low haze. This make the composition ideal for producing molding article such as injection molding articles in particular for producing thin-walled **injection** molding (**TWIM**) articles

Preferably the ratio between tensile modulus (measured as described in the examples) and the haze measured on 1 mm plaque (measured as described in the examples) is higher than 60, preferably higher than 68; more preferably higher than 72;

The polypropylene composition of the present disclosure is produced by sequential polymerization in at least two stages, with each subsequent polymerization stage being conducted in the presence of the polymeric material formed in the immediately preceding polymerization reaction, wherein the component (A) is normally prepared in at least one first polymerization stage and the component (B) is normally prepared in at least one second polymerization stage.

The polymerization process can be carried out in gas phase and/or in liquid phase, in continuous or batch reactors, such as fluidized bed or slurry reactors. For example, it is possible to carry out the polymerization of the propylene polymer (A) in liquid phase, using liquid propylene as diluent, while the copolymerization stage to obtain the propylene copolymer fraction (B) is carried out in gas phase, without intermediate stages except for the partial degassing of the monomers. Alternatively, all the sequential polymerization stages can be carried out in gas phase. The reaction time, temperature and pressure of the polymerization steps are not critical, however the temperature for the preparation of fraction (A) and (B), that can be the same or different, is usually from 50°C to 120°C. The polymerization pressure preferably ranges from 0.5 to 12 MPa if the polymerization is carried out in gas-phase. The catalytic system can be pre-contacted (pre-polymerized) with small amounts of olefins. The molecular weight of the propylene polymer composition is regulated by using known regulators, such as hydrogen.

In the second stage of the particularly preferred polymerization process, the propylene/ethylene copolymer (B) is produced in a conventional fluidized-bed gas-phase reactor in the presence of the polymeric material and the catalyst system coming from the preceding polymerization step. The propylene polymer compositions of the present invention can also be obtained by separately preparing the said copolymers (A) and (B), operating with the same catalysts and substantially under the same polymerization conditions as previously illustrated and subsequently mechanically blending said copolymers in the molten state using conventional mixing apparatuses, like twin-screw extruders.

Each polymerization stage is carried out in presence of a highly stereospecific heterogeneous Ziegler-Natta catalyst. The Ziegler-Natta catalysts suitable for producing the propylene polymer compositions of the invention comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

The polypropylene composition object of the present disclosure is preferably obtainable by polymerizing propylene and ethylene in various stages in the presence of a catalyst system comprising the product obtained by contacting the following components:

a) a solid catalyst component comprising a magnesium halide, a titanium compound having at least a Ti-halogen bond and at least one electron donor compound selected from succinates,
b) an aluminum hydrocarbyl compound, and
c) optionally an external electron donor compound.

In the solid catalyst component (a) the succinate is preferably selected from succinates of formula (I)

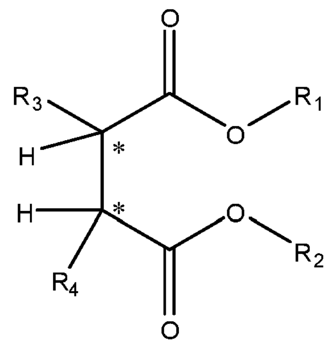

(I)

in which the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, $C_3$-$C_{20}$ cycloalkyl, $C_5$-$C_{20}$ aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the R3 and/or R4 radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

As explained above, the catalyst component (a) comprises, in addition to the above electron donors, a titanium compound having at least a Ti-halogen bond and a Mg halide. The magnesium halide is preferably $MgCl_2$ in active form

which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$ can be used, where n is the valence of titanium, y is a number between 1 and n-1 X is halogen and R is a hydrocarbon radical having from 1 to 10 carbon atoms.

Preferably, the catalyst component (a) has an average particle size ranging from 15 to 80 μm, more preferably from 20 to 70 μm and even more preferably from 25 to 65 μm.

The alkyl-Al compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 5 to 500, preferably from 5 to 400 and more preferably from 10 to 200.

The catalyst forming components can be contacted with a liquid inert hydrocarbon solvent such as, e.g., propane, n-hexane or n-heptane, at a temperature below about 60°C and preferably from about 0 to 30°C for a time period of from about 6 seconds to 60 minutes.

The above catalyst components (a), (b) and optionally (c) can be fed to a precontacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably said step (a) is carried out in the absence of inert hydrocarbon solvents.

The average residence time in this reactor generally ranges from 2 to 40 minutes, preferably from 10 to 25 minutes. The temperature ranges between 10°C and 50°C, preferably between 15°C and 35°C. Adopting these conditions allows to obtain a pre-polymerization degree in the preferred range from 60 to 800g per gram of solid catalyst component, preferably from 150 to 500 g per gram of solid catalyst component. Step (a) is further characterized by a low concentration of solid in the slurry, typically in the range from 50 g to 300 g of solid per liter of slurry.

The polypropylene composition of the present disclosure may further comprise additives commonly employed in the polyolefin field, such as antioxidants, light stabilizers, nucleating agents, antiacids, colorants and fillers.

The polypropylene composition of the present disclosure can be used for the production of injection molded articles.

The following examples are given to illustrate and not to limit the present invention.

## EXAMPLES

The data of the propylene polymer materials were obtained according to the following methods:

### Melt Flow Rate

Determined according to ISO 1133 (230° C, 2.16 kg).

Determination of ethylene (C2) content by NMR

$^{13}C$ NMR spectra were acquired on a Bruker AV-600 spectrometer equipped with cryoprobe, operating at 160.91 MHz in the Fourier transform mode at 120°C. Ethylene has been measured on the total composition. The ethylene content of component B) has been calculated by using the amount of component B) according to the following equation:

$$C_{2tot} = C_{2B} \text{ X wt\%compB}/100.$$

The samples were dissolved in 1,1,2,2-tetrachloroethane-d2 at 120°C with an 8% wt/v concentration. Each spectrum was acquired with a 90° pulse, 15 seconds of delay between pulses and CPD to remove $^{1}H$-$^{13}C$ coupling. 512 transients were stored in 32K data points using a spectral window of 9000 Hz.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120 °C with a 8 % wt/v concentration. Each spectrum was acquired with a 90° pulse, and 15 seconds of delay between pulses and CPD to remove $^{1}H$-$^{13}C$ coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:
E% mol = 100 * [PEP+PEE+EEE]The weight percentage of ethylene content was evaluated using the following equation:

$$E\%\ wt. = \frac{E\%\ mol * MWE}{E\%\ mol * MWE + P\%\ mol * MWP}$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP mm$T_{\beta\beta}$ (28.90-29.65 ppm) and the whole $T_{\beta\beta}$ (29.80-28.37 ppm).

The ethylene content of component B) has been calculated from the total ethylene content by using the following equation:

$$E\%wt\ total = E\%wt/B*wt\%B$$

Wherein E%wt total is the total ethylene content E%wt/B is the ethylene content of component B) and wt%B

is the amount (wt%/100) of component B).

Molar ratios of the feed gases

Determined by gas-chromatography.

Samples for the mechanical analysis

Samples have been obtained according to ISO 294-2

Flexural Modulus

Determined according to ISO 178.

Melting temperature, melting enthalpy and crystallization temperature

Determined according to ISO 11357-3, at scanning rate of 20C/min both in cooling and heating, on a sample of weight between 5 and 7 mg. under inert N2 flow. Instrument calibration made with Indium.

Xylene soluble and insoluble fractions at 25°C (room temperature)

Xylene Solubles according to ISO 16 152; with solution volume of 250 ml, precipitation at 25°C for 20 minutes, 10 of which with the solution in agitation (magnetic stirrer), and drying at 70°C under vacuum.

Intrinsic Viscosity (I.V.)

The sample is dissolved by tetrahydronaphthalene at 135 °C and then it is poured into the capillary viscometer.

The viscometer tube (Ubbelohde type) is surrounded by a cylindrical glass jacket; this setup allows temperature control with a circulating thermostated liquid.

The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through

Charpy impact strength

Charpy impact test according to ISO 179-1eA, e ISO 1873-2

Haze (on 1 mm plaque)

According to the method used, 5x5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.

75x75x1 mm plaques are molded with a GBF Plastiniector G235190 Injection Molding Machine, 90 tons under the following processing conditions:

Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec
Mold water temperature: 40°C

**Example 1 according to the invention**

Catalyst system

The Ziegler-Natta catalyst was prepared according to the Example 5, lines 48-55 of the European Patent EP728769. Triethylaluminium (TEAL) was used as co-catalyst and dicyclopentyldimethoxysilane (DCPMS ) as external donor, with the weight ratios indicated in Table 1.

Prepolymerization treatment

Before introducing it into the polymerization reactors, the solid catalyst component described above is subjected to prepolymerization by maintaining it in suspension in liquid propylene at 20 °C for about 5 minutes before introducing it into the first polymerization reactor.

Polymerization

The polymerization run is conducted in continuous mode in a series of three reactors equipped with devices to transfer the product from one reactor to the one immediately next to it. The first two reactors are liquid phase reactors, and the third is a fluid bed gas phase reactor. Component (A) is prepared in the first and second reactor, while component (B) is prepared in the third.
Hydrogen is used as molecular weight regulator.
The gas phase (propylene, ethylene and hydrogen) is continuously analyzed via gas-chromatography.
At the end of the run the powder is discharged and dried under a nitrogen flow.
The main polymerization conditions are reported in Table1.

Table 1

| | | **Ex. 1** |
|---|---|---|
| TEAL/solid catalyst component weight ratio | | 9,3 |
| TEAL/DCPMS weight ratio | | 10 |
| **Liquid phase reactors** | | |
| Polymerisation temperature | °C | 70 |
| Pressure | Bar-g | 38 |
| Residence time | minutes | 46 |
| H2 feed | molppm | 5839 |
| **1st gas phase reactor** | | |
| Polymerisation temperature | °C | 80 |
| Pressure | Barg | 13 |
| Residence time | min | 58 |
| C2/(C2 + C3) | Mol ratio | 0,705 |
| H2 / C2 | Mol ratio | 0,592 |
| C2=ethylene; C3=propylene; H2=hydrogen | | |

The polymers features are reported in table 2

Table 2

| Example | | Ex1 | Comp ex 2 |
|---|---|---|---|
| **Component a)** | | | |
| split | wt% | 85 | 85 |
| Ethylene content | wt% | 0 | 3.2 |

(continued)

| Example | | Ex1 | Comp ex 2 |
|---|---|---|---|
| **Component a)** | | | |
| MFR | g/10' | 81 | 20 |
| Xylene soluble at 25°C | wt% | 3.2 | 6 |
| | | | |
| **Component b)** | | | |
| split | wt% | 15 | 15 |
| Ethylene content in component b) | wt% | 82 | 80 |
| **Property of the composition** | | | |
| Xylene soluble at 25°C | wt% | 13.7 | - |
| MFR | g/10' | 64 | - |
| XSIV (intrinsic viscosity of XS) | dl/g | 1.05 | 1.2 |
| Ethylene content on the xylene soluble fraction | Wt% | 64.4 | - |
| | | | |
| Tensile Modulus | MPa | 1950 | 990 |
| Haze (1 mm plaque) | % | 25 | 16.4 |
| Melting temperature | °C | 163.3-110.9 | - |

Comparative example 2 is example 1 of WO 2011/045194, wherein the tensile modulus has been reported.

By comparing example 1 and comparative example 2 of table 2 it clearly results that the ratio tensile modulus/haze is higher in example 1 (78) vs comparative example 2 (62).

This means that by using the polymer of example 1 a more rigid structure can be obtained by keeping a low value of haze.

## Claims

**1.** A polypropylene composition comprising:

A) from 76 wt% to 95 wt% of a propylene homopolymer having:

- fraction soluble in xylene at 25°C comprised between 2.0 wt% and 4.5 wt%;
- melt flow rate (MFR L according to ISO 1133, condition L, i.e. 230°C and 2.16 kg load) ranging from 60.0 to 110.0 g/10 min;

B) from 5 wt% to 24 wt%, of a copolymer of propylene and ethylene containing from 75 wt% to 90.0 wt%, of ethylene derived units;

wherein in the polypropylene composition:

- the xylene soluble fraction at 25°C ranges from 6.8 wt% to 15.0 wt%;
- the intrinsic viscosity of the fraction soluble in xylene at 25°C ranges from 0.5 dl/g to 1.5 dl/g;
- the content of ethylene derived units in the fraction soluble in xylene at 25°C is lower than -
- the content of ethylene derived units of component B) and ranges from 51.0 wt% to 74.0 wt%,
- the polypropylene composition has at least two melting points, the higher ranging from 156.0 °C to 166.0 °C and the lower ranging from 90.0 °C to 125.0°C; and
- melt flow rate (MFR L according to ISO 1133, condition L, i.e. 230°C and 2.16 kg load) ranging from 45.0 to 110.0 g/10 min

the sum of the amounts of component A) and B) being 100 wt%.

2. The polypropylene composition according to claim 1 wherein in component (A) the fraction soluble in xylene at 25°C is comprised between 2.5 wt% to 3.8 wt%.

3. The polypropylene composition according to claims 1 or 2 wherein component B) contains from 77.0 wt% to 88.0 wt% of ethylene derived units.

4. The polypropylene composition according to anyone of claims 1-3 wherein the xylene soluble fraction at 25°C ranges from 7.0 wt% to 13.0 wt.

5. The polypropylene composition according to anyone of claims 1-4 wherein the intrinsic viscosity of the fraction soluble in xylene at 25°C ranges from 0.7 dl/g to 1.3 dl/g.

6. The polypropylene composition according to anyone of claims 1-5 wherein the polypropylene composition has at least two melting points, the higher ranging from 158.0°C to 165.0°C and the lower ranging from 100.0°C to 120.0 °C.

7. The polypropylene composition according to anyone of claims 1-6 wherein the content of ethylene derived units in the fraction soluble in xylene at 25°C is lower than the content of ethylene derived units of component B) and ranges from 55.0 wt% to 71 wt%.

8. The polypropylene composition according to anyone of claims 1-7 wherein the melt flow rate (MFR L according to ISO 1133, condition L, i.e. 230°C and 2.16 kg load) ranges from 50 g/10 min to 90 g/10 min.

9. The polypropylene composition according to anyone of claims 1-8 wherein component A) ranges from 79 wt% to 81 wt% and component B) ranges from 9 wt% to 21 wt%.

10. The polypropylene composition according to anyone of claims 1-9 wherein component A) ranges from 82 wt% to 88 wt% and component B) ranges from 12 wt% to 18 wt%..

11. The polypropylene composition according to anyone of claims 1-10 wherein component B) contains from 79.0 wt% to 86.0 wt% of ethylene derived units..

12. The polypropylene composition according to anyone of claims 1-11 the xylene soluble fraction at 25°C ranges from 7.5 wt% to 11.0 wt..

13. The polypropylene composition according to anyone of claims 1-12 wherein the content of ethylene derived units in the fraction soluble in xylene at 25°C is lower than the content of ethylene derived units of component B) and ranges from 58.0 wt% to 67 wt%.

14. The polypropylene composition according to anyone of claims 1-13 wherein the polypropylene composition has at least two melting points, the higher ranging from 159.0°C to 165.0°C and the lower ranging from 104.0°C to 117.0 °C.

15. Injection molded articles comprising the polypropylene composition of claims 1-14

**Patentansprüche**

1. Polypropylenzusammensetzung, umfassend:

A) 76 Gew.% bis 95 Gew.% eines Propylenhomopolymers mit:

- einer in Xylol bei 25 °C löslichen Fraktion zwischen 2,0 Gew.% und 4,5 Gew.%;
- einer Schmelzflussrate (MFR L gemäß ISO 1133, Bedingung L, d. h. 230 °C und 2,16 kg Last) im Bereich von 60,0 bis 110,0 g/10 min;

B) 5 Gew.% bis 24 Gew.% eines Copolymers von Propylen und Ethylen, das 75 Gew.% bis 90,0 Gew.% von Ethylen abgeleiteten Einheiten enthält;

wobei in der Polypropylenzusammensetzung:

- die in Xylol bei 25 °C lösliche Fraktion im Bereich von 6,8 Gew.% bis 15,0 Gew.% liegt;
- die Grenzviskosität der in Xylol bei 25 °C löslichen Fraktion im Bereich von 0,5 dl/g bis 1,5 dl/g liegt;
- der Gehalt an von Ethylen abgeleiteten Einheiten in der in Xylol bei 25 °C löslichen Fraktion niedriger als der Gehalt an von Ethylen abgeleiteten Einheiten der Komponente B) ist und im Bereich von 51,0 Gew.% bis 74,0 Gew.% liegt;
- die Polypropylenzusammensetzung mindestens zwei Schmelzpunkte aufweist, wobei der höhere im Bereich von 156,0 °C bis 166,0 °C liegt und der niedrigere im Bereich von 90,0 °C bis 125,0 °C liegt; und
- eine Schmelzflussrate (MFR L gemäß ISO 1133, Bedingung L, d. h. 230 °C und 2,16 kg Last) im Bereich von 45,0 bis 110,0 g/10 min liegt;

wobei die Summe der Mengen von Komponente A) und B) 100 Gew.% beträgt.

2. Polypropylenzusammensetzung nach Anspruch 1, wobei in Komponente A) die in Xylol bei 25 °C lösliche Fraktion zwischen 2,5 Gew.% und 3,8 Gew.% liegt.

3. Polypropylenzusammensetzung nach den Ansprüchen 1 oder 2, wobei Komponente B) 77,0 Gew.% bis 88,0 Gew.% von Ethylen abgeleitete Einheiten enthält.

4. Polypropylenzusammensetzung nach einem der Ansprüche 1 bis 3, wobei die in Xylol bei 25 °C lösliche Fraktion im Bereich von 7,0 Gew.% bis 13,0 Gew.% liegt.

5. Polypropylenzusammensetzung nach einem der Ansprüche 1 bis 4, wobei die Grenzviskosität der in Xylol bei 25 °C löslichen Fraktion im Bereich von 0,7 dl/g bis 1,3 dl/g liegt.

6. Polypropylenzusammensetzung nach einem der Ansprüche 1 bis 5, wobei die Polypropylenzusammensetzung mindestens zwei Schmelzpunkte aufweist, wobei der höhere im Bereich von 158,0 °C bis 165,0 °C liegt und der niedrigere im Bereich von 100,0 °C bis 120,0 °C liegt.

7. Polypropylenzusammensetzung nach einem der Ansprüche 1 bis 6, wobei der Gehalt an von Ethylen abgeleiteten Einheiten in der in Xylol bei 25 °C löslichen Fraktion niedriger als der Gehalt an von Ethylen abgeleiteten Einheiten der Komponente B) ist und im Bereich von 55,0 Gew.% bis 71 Gew.% liegt.

8. Polypropylenzusammensetzung nach einem der Ansprüche 1 bis 7, wobei die Schmelzflussrate (MFR L gemäß ISO 1133, Bedingung L, d. h. 230 °C und 2,16 kg Last) im Bereich von 50 g/10 min bis 90 g/10 min liegt.

9. Polypropylenzusammensetzung nach einem der Ansprüche 1 bis 8, wobei Komponente A) im Bereich von 79 Gew.% bis 81 Gew.% und Komponente B) im Bereich von 9 Gew.% bis 21 Gew.% liegt.

10. Polypropylenzusammensetzung nach einem der Ansprüche 1 bis 9, wobei Komponente A) im Bereich von 82 Gew.% bis 88 Gew.% und Komponente B) im Bereich von 12 Gew.% bis 18 Gew.% liegt.

11. Polypropylenzusammensetzung nach einem der Ansprüche 1 bis 10, wobei Komponente B) 79,0 Gew.% bis 86,0 Gew.% von Ethylen abgeleitete Einheiten enthält.

12. Polypropylenzusammensetzung nach einem der Ansprüche 1 bis 11, wobei die in Xylol bei 25 °C lösliche Fraktion im Bereich von 7,5 Gew.% bis 11,0 Gew.% liegt.

13. Polypropylenzusammensetzung nach einem der Ansprüche 1 bis 12, wobei der Gehalt an von Ethylen abgeleiteten Einheiten in der in Xylol bei 25 °C löslichen Fraktion niedriger als der Gehalt an von Ethylen abgeleiteten Einheiten der Komponente B) ist und im Bereich von 58,0 Gew.% bis 67 Gew.% liegt.

14. Polypropylenzusammensetzung nach einem der Ansprüche 1 bis 13, wobei die Polypropylenzusammensetzung mindestens zwei Schmelzpunkte aufweist, wobei der höhere im Bereich von 159,0 °C bis 165,0 °C liegt und der niedrigere im Bereich von 104,0 °C bis 117,0 °C liegt.

15. Spritzgegossener Artikel, umfassend die Polypropylenzusammensetzung nach den Ansprüchen 1 bis 14.

## Revendications

**1.** Composition de polypropylène comprenant :

A) 76 % en poids à 95 % en poids d'un homopolymère de propylène présentant :

- une fraction soluble dans le xylène à 25 °C située entre 2,0 % en poids et 4,5 % en poids ;
- un indice de fluidité à chaud (MFR L selon la norme ISO 1133, condition L, c'est-à-dire à 230 °C et sous une charge de 2,16 kg) situé dans la plage de 60,0 à 110,0 g/10 min ;

B) 5 % en poids à 24 % en poids d'un copolymère de propylène et d'éthylène contenant 75 % en poids à 90,0 % en poids de motifs dérivés d'éthylène ;

où, dans la composition de polypropylène :

- la fraction soluble dans le xylène à 25 °C est située dans la plage de 6,8 % en poids à 15,0 % en poids ;
- la viscosité intrinsèque de la fraction soluble dans le xylène à 25 °C est située dans la plage de 0,5 dl/g à 1,5 dl/g ;
- la teneur en motifs dérivés d'éthylène dans la fraction soluble dans le xylène à 25 °C est inférieure à la teneur en motifs dérivés d'éthylène du constituant B) et est située dans la plage de 51,0 % en poids à 74,0 % en poids,
- la composition de polypropylène présente au moins deux points de fusion, le plus élevé étant situé dans la plage de 156,0 °C à 166,0 °C et le moins élevé étant situé dans la plage de 90,0 °C à 125,0 °C ; et
- un indice de fluidité à chaud (MFR L selon la norme ISO 1133, condition L, c'est-à-dire à 230 °C et sous une charge de 2,16 kg) étant situé dans la plage de 45,0 à 110,0 g/10 min,

la somme des quantités du constituant A) et B) valant 100 %.

**2.** Composition de polypropylène selon la revendication 1, dans laquelle, dans le constituant (A), la fraction soluble dans le xylène à 25 °C est située entre 2,5 % en poids et 3,8 % en poids.

**3.** Composition de polypropylène selon les revendications 1 ou 2, dans laquelle le constituant B) contient 77,0 % en poids à 88,0 % en poids de motifs dérivés d'éthylène.

**4.** Composition de polypropylène selon l'une quelconque des revendications 1 à 3, dans laquelle la fraction soluble dans le xylène à 25 °C est située dans la plage de 7,0 % en poids à 13,0 % en poids.

**5.** Composition de polypropylène selon l'une quelconque des revendications 1 à 4, dans laquelle la viscosité intrinsèque de la fraction soluble dans le xylène à 25 °C est située dans la plage de 0,7 dl/g à 1,3 dl/g.

**6.** Composition de polypropylène selon l'une quelconque des revendications 1 à 5, dans laquelle la composition de polypropylène présente au moins deux points de fusion, le plus élevé étant situé dans la plage de 158,0 °C à 165,0 °C et le plus bas étant situé dans la plage de 100,0 °C à 120,0 °C.

**7.** Composition de polypropylène selon l'une quelconque des revendications 1 à 6, dans laquelle la teneur en motifs dérivés d'éthylène dans la fraction soluble dans le xylène à 25 °C est inférieure à la teneur en motifs dérivés d'éthylène du constituant B) et est située dans la plage de 55,0 % en poids à 71 % en poids.

**8.** Composition de polypropylène selon l'une quelconque des revendications 1 à 7, dans laquelle l'indice de fluidité à chaud (MFR L selon la norme ISO 1133, condition L, c'est-à-dire à 230 °C et sous une charge de 2,16 kg) est situé dans la plage de 50 g/10 min à 90 g/10 min.

**9.** Composition de polypropylène selon l'une quelconque des revendications 1 à 8, dans laquelle le constituant A) représente 79 % en poids à 81 % en poids et le constituant B) représente 9 % en poids à 21 % en poids.

**10.** Composition de polypropylène selon l'une quelconque des revendications 1 à 9, dans laquelle le constituant A) représente 82 % en poids à 88 % en poids et le constituant B) représente 12 % en poids à 18 % en poids.

11. Composition de polypropylène selon l'une quelconque des revendications 1 à 10, dans laquelle le constituant B) contient 79,0 % en poids à 86,0 % en poids de motifs dérivés d'éthylène.

12. Composition de polypropylène selon l'une quelconque des revendications 1 à 11, dans laquelle la fraction soluble dans le xylène à 25 °C représente 7,5 % en poids à 11,0 % en poids.

13. Composition de polypropylène selon l'une quelconque des revendications 1 à 12, dans laquelle la teneur en motifs dérivés d'éthylène dans la fraction soluble dans le xylène à 25 °C est inférieure à la teneur en motifs dérivés d'éthylène du constituant B) et est située dans la plage de 58,0 % en poids à 67 % en poids.

14. Composition de polypropylène selon l'une quelconque des revendications 1 à 13, dans laquelle la composition de polypropylène présente au moins deux points de fusion, le plus élevé étant situé dans la plage de 159,0 °C à 165,0 °C et le plus bas étant situé dans la plage de 104,0 °C à 117,0 °C.

15. Articles moulés par injection comprenant la composition de polypropylène selon les revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 603723 A
- EP 45977 A
- EP 361494 A
- EP 728769 A
- EP 1272533 A
- WO 00163261 A
- US 4298718 A
- US 4495338 A
- WO 2011045194 A


### Non-patent literature cited in the description


- **C. J. CARMAN ; R. A. HARRINGTON ; C. E. WILKES.** Monomer Sequence Distribution in Ethylene-Propylene Rubber Measured by C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536